# EUROPEAN PATENT APPLICATION

(11) **EP 0 762 137 A2**
(43) Date of publication of application: **12.03.1997**
(21) Application number: 96306406.8
(22) Date of filing: 04.09.1996
(51) Int. Cl.: G01R 31/28

(54) **Liquid crystal display and testing method thereof**

(30) Priority: 07.09.1995 JP 230252/95
(71) Applicant: SEIKO INSTRUMENTS INC., Chiba-shi, Chiba 261 (JP)
(72) Inventor: Matsuhira, Tsutomu, c/o Seiko Instruments Inc., Chiba-shi, Chiba (JP)
(74) Representative: Sturt, Clifford Mark

(57) **Abstract**

A low cost liquid crystal display and a low cost liquid crystal panel testing method are provided. Connecting terminals (2) which are connected with a transparent electrode (3) which composes a liquid crystal panel section and to which a liquid crystal driver IC (7) is connected are staggered and are extended in the direction of center of a semiconductor chip. The testing is carried out by connecting a solid electrode (4) to staggered patterns of the connecting terminals (2).

## Description

The present invention relates to a liquid crystal display for use in lap-top and notebook type personal computers and portable equipment.

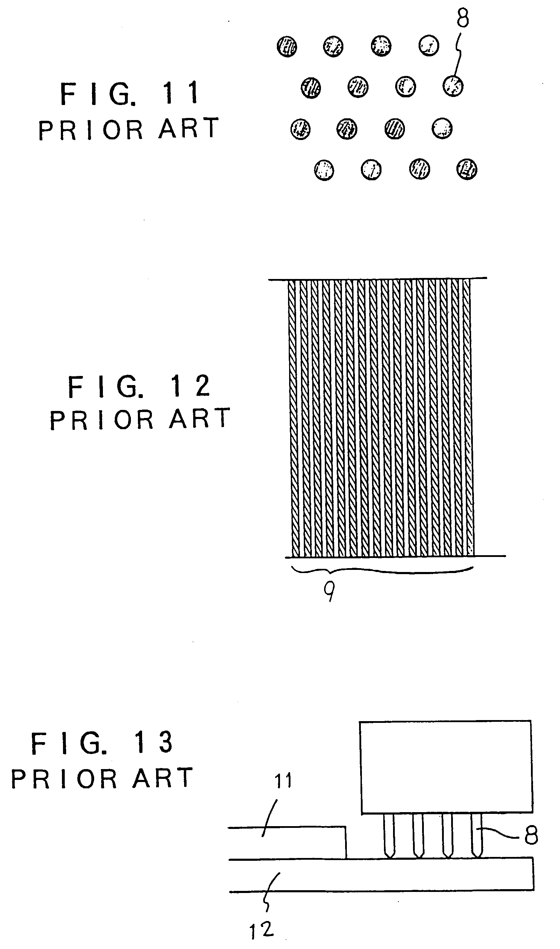

As shown in Fig. 12, a screen of a conventional simple matrix liquid crystal display panel has been tested by electrically connecting a testing substrate with connecting terminals 9 provided on a transparent substrate in order to connect with TCP and heat seal via conductive rubber or the like and by turning the whole display screen ON. Or it has been tested by contacting each connecting terminal with a probe.

In a simple matrix liquid crystal panel having a COG (Chip On Glass) packaging structure, a connecting terminal section is composed of terminals which are connected with a bump of a liquid crystal driver IC, i.e. a transparent electrode drawn around from picture elements, and input terminals for supplying signals to the liquid crystal driver IC. In this case, the liquid crystal driver IC is connected after testing for shorts caused by patterning failure or the like and an image quality by turning the whole display ON by contacting a probe to the terminals connected with the bump of the liquid crystal driver IC and the input terminals.

Although it is possible to test the image quality of the simple matrix liquid crystal display by turning the whole display ON, it is necessary to contact with the probe in order to test for shorts, except in a liquid crystal display in which transparent electrodes are pulled out comblike to two opposing sides.

Further, there has been a problem that when electroless plating of nickel or the like is implemented on the connecting terminal section after assembling cells, catalyst may stay at the edge of glasses and such a portion is plated regardless of whether there is a pattern or not, thus shorting when there is a plurality of patterns. Or, there is a case when plating contaminant enters the outer periphery of sealant between two glasses, thus shorting the electrodes. While it has been necessary to contact with the probe to test such failures, the pitch of the array of the probe is limited to 300 to 360 microns, so that the connecting terminals having a pitch of 90 microns could not be contacted unless the probe is staggered in four stages, as shown in Fig. 11. Then, the connecting terminals of the transparent substrate are contacted with the probe 8 in order to test, as shown in Fig. 13.

There has been also another problem that because a longitudinal dimension of the liquid crystal driver IC is slimmed in the COG packaging structure, no contacting section may be available, disallowing the testing if the connection pitch becomes too small.

Further, the probe used in this test has been so expensive that it costs 3000 to 4000 Yen per pin, increasing the cost of the test corresponding to a number of electrodes. Still more, because it has taken time in a registering process in the test carried out by means of the probe, the production efficiency has been bad and it has been difficult to reduce the cost of the liquid crystal display.

There have been also problems when the transparent electrode is pulled out comblike to the opposing side that the overall size of the liquid crystal display increases, a number of liquid crystal displays taken from a mother glass is reduced, thus increasing the cost, and it is unable to deal with a dual scan type liquid crystal display.

Accordingly, it is an object of the present invention to provide a liquid crystal display and a testing method thereof which allow a short failure to be tested readily, reliably and at low cost while keeping the present size and while turning the whole display ON regardless of the connecting pitch and dimension.

In order to achieve the aforementioned object, in a first aspect, this invention provides a liquid crystal display having a structure in which two transparent substrates each having a plurality of transparent electrodes formed on a surface thereof are opposed so that the electrodes are opposed in a matrix, liquid crystal is interposed therebetween and is retained by a sealant, and said plurality of transparent electrodes facing in a matrix compose picture elements, characterised in that;
connecting terminals for connecting circuits to said plurality of transparent electrodes are staggered in two stages on at least one transparent substrate.

In a second aspect, this invention provides a testing method for testing a liquid crystal display, characterised by comprising steps of:
connecting or contacting a testing electrode to connecting terminals staggered in two stages; and
applying liquid crystal driving signals thereto.

Thereby, it becomes possible to test for shorts by displaying every other line while turning the whole display ON by contacting or connecting a testing electrode to the terminals.

Because a liquid crystal display having a COG packaging structure has a pad section in particular for connecting terminals with a semiconductor chip, it is possible to test it by staggering the terminals in two stages so as to extend from the pad section for connecting the semiconductor chip. It may be used also in testing a short after when electrodes made of metal are laminated on the transparent electrode by means of electroless plating.

As for a testing method, the electrode fabricated by plating gold on a film substrate is pressed to the staggered terminals by means of an elastic supporter for example or conductive paste which can be peeled off is applied linearly to them by means of a dispenser and is sintered. Then, liquid crystal driving signals are supplied from the conductor section. When there is no short, the display is turned on every other line. When there is a short however, the display is turned on three lines consecutively. Thereby, the short may be tested, i.e. it is possible to judge whether a short exists or not.

The liquid crystal display constructed as described above may be tested in terms of the short caused by defective patterning without changing the overall size. The dual scan type liquid crystal display may be also tested without using a probe. The present invention also allows the short between the electrodes caused after forming a metal film on the transparent electrode and the short caused by metal contaminant which entered between the glass substrates to be tested at low cost. The present invention also allows testing those having a peculiar shape of connecting terminals or having a fine electrode pitch which have been difficult to test by means of a probe in the past, thus widening a range in which it can deal with.

The above and other advantages of the present invention will become more apparent in the following description and the accompanying drawings in which like numerals refer to like parts.

Embodiments of the invention will now be described, by way of example only, with reference to the accompanying diagrammatic figures, in which;
FIG. 1 is a front view of a liquid crystal display of the present invention;
FIG. 2 is a side view showing a state of connection of an inventive film substrate with a liquid crystal panel;
FIG. 3 is a side view showing another state of connection of the inventive film substrate with the liquid crystal panel;
FIG. 4 shows a tested display screen of the liquid crystal panel of the present invention;
FIG. 5 shows another tested display screen of the liquid crystal panel of the present invention;
FIG. 6 shows still another tested display screen of the liquid crystal panel of the present invention;
FIG. 7 shows a further tested display screen of the liquid crystal panel checked by the present invention;
FIG. 8 is a side view showing a state wherein a conductive paste is applied on the liquid crystal panel of the present invention;
FIG. 9 is a side view showing another state wherein the conductive paste is applied on the liquid crystal panel of the present invention;
FIG. 10 is a front view of the liquid crystal display of the present invention;
FIG. 11 is a plan view of a layout of a prior art probe staggered in four stages;
FIG. 12 is a plan view of prior art connecting terminals; and
FIG. 13 is a side view showing a state wherein the prior art probe contacts with the connecting terminals.

Preferred embodiments of the present invention will be explained below with reference to the drawings.

### [First Embodiment]

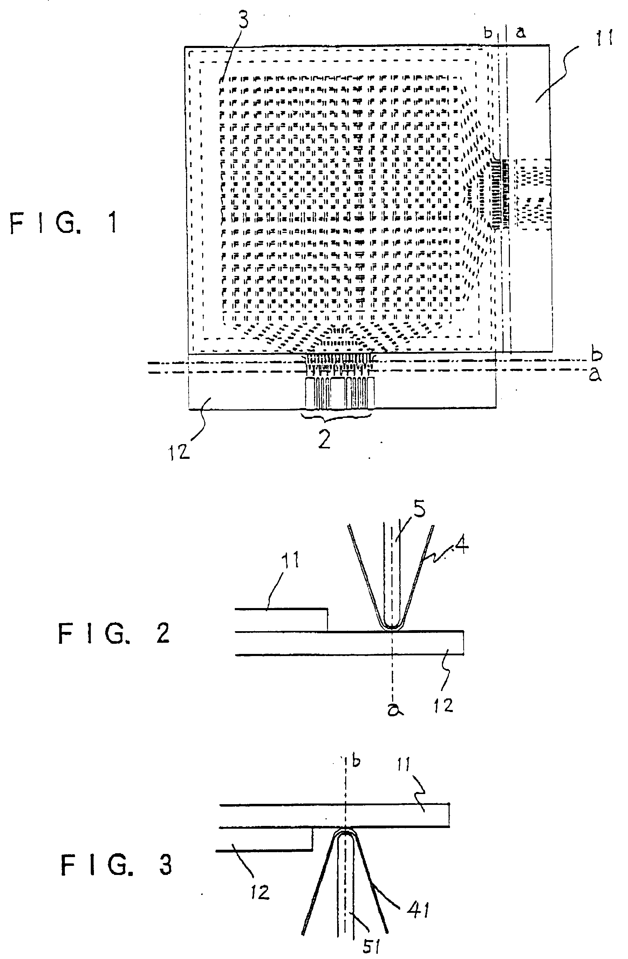

FIG. 1 is a front view of the first embodiment of the present invention. Patterns 3 each formed of Indium Tin Oxide (ITO) are formed on opposed surfaces of transparent substrates 11 and 12 made of glass and a screen is composed of parts where those patterns provided on each transparent substrate overlap in a matrix. Connecting terminals are formed to connect liquid crystal driver ICs for supplying signals to each of the patterns. The connecting terminals comprise signal input terminals 2 of the liquid crystal driver ICs and terminals for supplying signals to the patterns 3. The terminals for supplying signals to the patterns 3 are staggered in two stages continuously. That is, the terminals for supplying signals to the patterns 3 exist every other terminal on a dashed line a and they exist for all terminals on a two-dot chain line b.

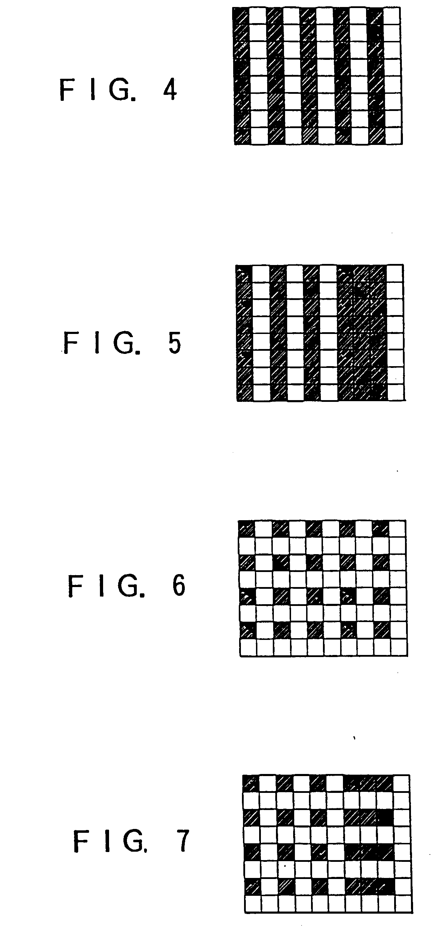

As shown in FIG. 2, a gold-plated face of a film substrate 4 fabricated by pasting a copper foil to a polyimide film and by gold plating it is pressed by a supporter 5 made of stainless steel whose surface is coated with rubber to connect with the transparent substrate 12 on the dashed line a. A gold plated face of another polyimide film substrate 41 is also pressed to and connected with the transparent substrate 11 at the position of the two-dot chain line b, similarly as shown in FIG. 3. Then, liquid crystal driving signals are supplied to the electrodes of the film substrates 4 and 41 connected to each transparent substrate 11 and 12 to judge whether it is a good product or not from its display screen. FIGS. 4 and 5 show the screens at this time. FIG. 4 shows a good product, wherein the display is turned on every other line. FIG. 5 shows a defective product, wherein three lines are turned on consecutively. This test is conducted per substrate and the test has to be conducted twice with this method.

Alternately, each film substrate is pressed to and connected with one of the transparent substrates on the respective dashed line a in FIG. 1. FIGS. 6 and 7 show the screens at this time. FIG. 6 shows a good product, wherein the display of the both of the substrates is turned on every other line. FIG. 7 shows a defective product, wherein three lines are turned on consecutively. This method allows both substrates to be tested at the same time.

The testing film substrate may be supplied in a roll. Accordingly, when the contact of the film substrate becomes inferior, the contact portion may be moved by winding it up and a new gold plated portion may be supplied successively.

The short which might be caused when a metal film is formed on the connecting terminals of the liquid crystal display may be tested in the same manner.

### [Second Embodiment]

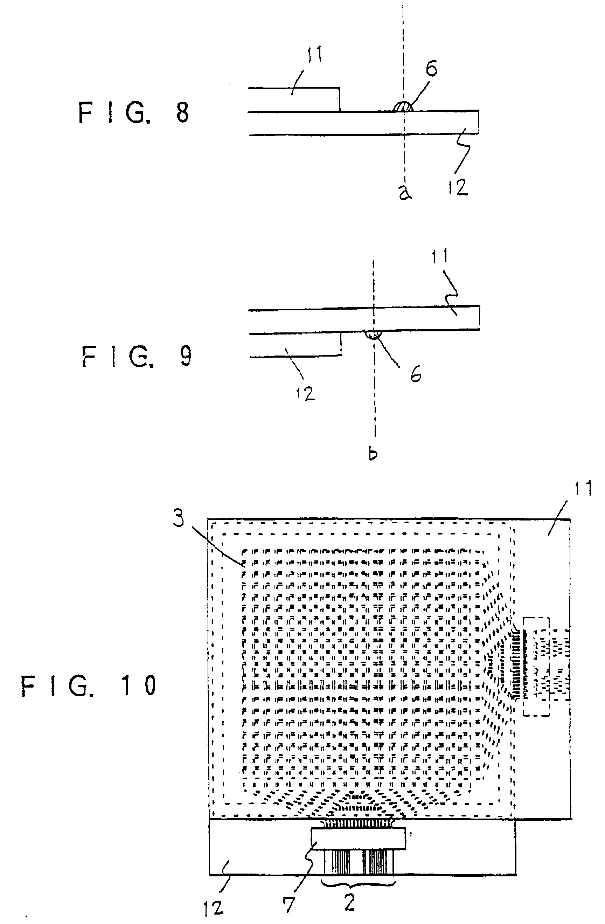

FIGS. 8 and 9 show the second embodiment of the present invention, wherein the connection with the terminals is made via conductive paste. FIG. 8 shows a state wherein the conductive paste 6 is applied on the position of the dashed line a on the transparent substrate 12 in FIG. 1 by means of a dispenser and FIG. 9 shows a state wherein the conductive paste 6 is applied to the position of the two-dot chain line b on the transparent substrate 11 in FIG. 1. Liquid crystal driving signals are supplied after sintering the conductive paste 6. The testing method is the same as that in the first embodiment.

A liquid crystal panel which has passed the above tests is completed by connecting a liquid crystal driver IC 7 and connecting the film substrate to the input terminal 2 as shown in FIG. 10.

As described above, the present invention allows the short caused by defective patterning to be tested readily without changing the overall size and allows the dual scan type liquid crystal display to be dealt with. It also allows the short of the metal film at the fine pitch connecting section fabricated by electroless plating or the like or the short caused by metal contaminant entered between the transparent substrates to be tested readily at low cost. Because only good products can be passed to the next process by this test, a rate of defective products after connecting the liquid crystal driver IC has been lowered and it has become possible to provide liquid crystal displays at low cost. It has become possible to provide low cost liquid crystal displays, especially those produced in a small amount, because no initial cost of the test such as the probe is required. This testing method is also effective in testing a short caused not only after the electroless plating but also after forming silver paste on a transparent conductive film by rubbing. Although the slim liquid crystal driver IC has been used in the embodiments described above, it is possible to deal with a square or rectangular liquid crystal driver IC by applying the conductive paste in a shape of inverted-C by forming patterns of the liquid crystal display so as to extend from the connecting section toward the center of the IC in zigzag. It is of course possible to deal with various liquid crystal driver ICs in connecting with the film substrate by changing the shape of the supporter.

While preferred embodiments have been described, variations thereto will occur to those skilled in the art within the scope of the present inventive concepts which are delineated by the following claims.

Thus, according to the present invention, in a liquid crystal display having a structure in which two transparent substrates having at least a plurality of transparent electrodes formed on the surface thereof face so that the electrodes face in a matrix, liquid crystal is interposed therebetween and is held by surrounding it by sealant, and the plurality of transparent electrodes facing in a matrix compose picture elements, connecting terminals for connecting circuits to the plurality of transparent electrodes are staggered in two stages at least on one transparent substrate.

The aforegoing description has been given by way of example only and it will be appreciated by a person skilled in the art that modifications can be made without departing from the scope of the present invention.

## Claims

1. A liquid crystal display having a structure in which two transparent substrates (11,12) each having a plurality of transparent electrodes (3) formed on a surface thereof are opposed so that the electrodes are opposed in a matrix, liquid crystal is interposed therebetween and is retained by a sealant, and said plurality of transparent electrodes facing in a matrix compose picture elements, characterised in that;
connecting terminals for connecting circuits to said plurality of transparent electrodes are staggered in two stages on at least one transparent substrate.

2. The liquid crystal display according to Claim 1, wherein said connecting terminals have a laminated structure in which a metal is formed on said transparent electrode.

3. The liquid crystal display according to Claim 1, wherein said connecting terminals are connected with a semiconductor chip (7) and terminals of said connecting terminals are extended in zigzag in the direction of center of said semiconductor chip from a connecting section with said semiconductor chip.

4. A testing method for testing a liquid crystal display, characterised by comprising steps of:
connecting or contacting a testing electrode (4) to connecting terminals staggered in two stages; and
applying liquid crystal driving signals thereto.
